(19) Europäisches Patentamt

European Patent Office

Office européen des brevets

(11) **EP 1 130 798 B1**

(12) **FASCICULE DE BREVET EUROPEEN**

(45) Date de publication et mention
de la délivrance du brevet:
**25.09.2002 Bulletin 2002/39**

(51) Int Cl.⁷: **H04B 7/005**

(21) Numéro de dépôt: **01400356.0**

(22) Date de dépôt: **12.02.2001**

(54) **Système de contrôle de la puissance d'émission d'une station de base avec laquelle plusieurs stations mobiles sont en communication**

System zur Sendeleistungsregelung in einem Basistation in Verbindung mit verschiedenen Mobilestationen

Transmission power control system in a base station that is communicating with several mobile units

(84) Etats contractants désignés:
**AT BE CH CY DE DK ES FI FR GB GR IE IT LI LU MC NL PT SE TR**

(30) Priorité: **29.02.2000 FR 0002726**

(43) Date de publication de la demande:
**05.09.2001 Bulletin 2001/36**

(73) Titulaire: **Mitsubishi Electric Information Technology Centre Europe B.V. 1101 AG Amsterdam Zuidoost (NL)**

(72) Inventeur: **Voyer, Nicolas, Immeuble Germanium 35700 Rennes (FR)**

(74) Mandataire: **Maillet, Alain Cabinet le Guen & Maillet, 5, Place Newquay, B.P. 70250 35802 Dinard Cedex (FR)**

(56) Documents cités:
**EP-A- 0 907 296        WO-A-00/01087
WO-A-00/03487         WO-A-95/24102**

**Description**

La présente invention concerne un système de contrôle de la puissance d'émission d'une station de base avec laquelle plusieurs stations mobiles sont en communication.

Dans un système de télécommunications pour téléphones mobiles (ou stations mobiles), le signal qui est transmis par une station de base servant une cellule est un signal composite constitué de la somme des signaux respectivement dédiés aux stations mobiles qui se trouvent sous la couverture de ladite cellule et de signaux spécifiques destinés à toutes les stations mobiles. Tous ces signaux sont émis multiplexés. Par exemple, comme c'est le cas dans un système de télécommunications CDMA, tous ces signaux sont émis en même temps, sur la même fréquence, multiplexés au moyen de codes d'étalement.

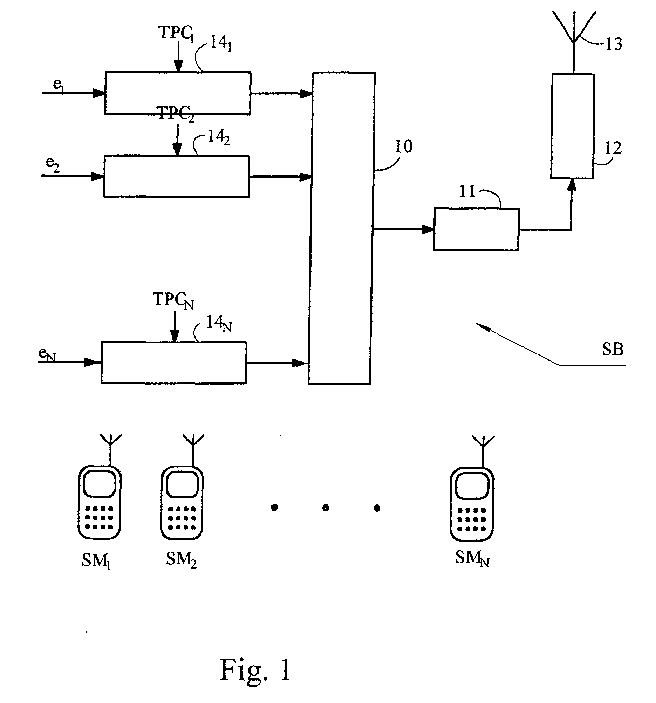

On a représenté, schématiquement à la Fig. 1, la section émettrice d'une station de base d'un tel système de télécommunication. On peut constater que les signaux $e_1$ à eN destinés aux différentes stations mobiles sont sommés dans une unité de sommation 10 et que le signal somme est converti en fréquences radiofréquences dans une unité de conversion 11 avant d'être amplifié par un amplificateur 12 pour être émis à destination des stations mobiles rattachées à ladite station de base au moyen d'une antenne 13.

Dans un tel système de télécommunications pour téléphones mobiles, sont également prévus des moyens de contrôle de puissance pour que le signal reçu par une station mobile soit de puissance constante et, ce, malgré les atténuations du canal de propagation entre elle et la station de base. Par exemple, chaque station mobile $SM_i$ émet un signal de commande $TPC_i$ qui est représentatif d'une requête d'augmentation ou de diminution de la part de la station de base de la puissance d'émission qui lui est destinée. A la Fig. 1, des unités de contrôle de puissance $14_1$ à $14_N$ sont prévues pour respectivement recevoir les signaux de commande $TPC_1$ à $TCP_N$ émis par des stations mobiles $SM_1$ à $SM_N$ et pour modifier, avant leurs applications aux entrées correspondantes de l'unité de sommation 10, les signaux d'entrée $e_1$ à $e_N$ conformément aux requêtes de ces signaux de commande $TPC_1$ à $TCP_N$.

Ainsi, la puissance totale du signal composite transmis par la station de base est la somme des puissances des divers signaux (dédiés et communs) qui le composent. Cette puissance varie dans le temps et dépend à chaque instant du nombre de stations mobiles rattachées à ladite station de base.

Par ailleurs, on notera que, dans un tel système de télécommunications, lorsque le nombre de stations mobiles rattachées à une station de base devient de plus en plus important, le niveau global d'interférences entre stations mobiles augmente. Dans ce cas, afin de maintenir constant le rapport signal à interférence (ce qui assure un bon niveau de qualité de service), on augmente généralement le niveau de puissance de transmission de toutes les stations mobiles. Par conséquent, théoriquement, le niveau de puissance totale émis par la station de base nécessaire diverge vers l'infini quand le nombre de stations mobiles rattachées à une station de base s'approche d'une valeur limite qui est appelée capacité maximale de la station de base.

Un même phénomène peut être observé lorsque les mobiles s'éloignent globalement de la station de base. La puissance d'émission de celle-ci peut aussi croître de manière drastique.

Cependant, la puissance que peut fournir l'amplificateur de puissance 12 d'une station de base d'un tel système de télécommunications est nécessairement limitée, si bien que, lorsque le nombre de stations mobile rattachées à elle augmente ou lorsque les mobiles s'éloignent globalement de la station de base, son signal de sortie devient saturé. Qui plus est, la non-linéarité de cet amplificateur provoque une forte distorsion du signal de sortie avant même d'atteindre ce niveau de saturation. Cela entraîne une rupture de communications pour toutes les stations mobiles contre laquelle il est important de se prémunir.

Cela a également pour conséquence une limitation de la couverture de la station de base concerné.

Pour résoudre le problème qui vient d'être explicité, on a proposé des moyens pour assurer que la puissance moyenne de transmission du signal composite soit toujours inférieure à une valeur prédéterminée critique dite par la suite valeur de puissance de fonctionnement. Cette valeur de fonctionnement est par exemple égale à la valeur de saturation de l'amplificateur de puissance 12 diminuée d'une valeur de retrait tenant compte des fluctuations instantanées de la puissance du signal composite autour de sa valeur moyenne.

Une solution connue de mise en oeuvre de ces moyens consiste à utiliser un limiteur de puissance qui, lors d'une saturation de la station de base, agit sur le signal composite de manière que sa puissance d'émission, après amplification, soit inférieure à une puissance prédéterminée. Néanmoins, cette solution a pour effet d'affecter uniformément tous les signaux élémentaires formant le signal composite. La distorsion du signal composite est certes évitée mais la contribution à la puissance émise destinée à une station mobile particulière est nécessairement inférieure à celle requise par ladite station mobile. Ainsi, l'inconvénient d'une telle solution réside dans le fait que toutes les stations mobiles sont uniformément atteintes dans la qualité de leur transmission.

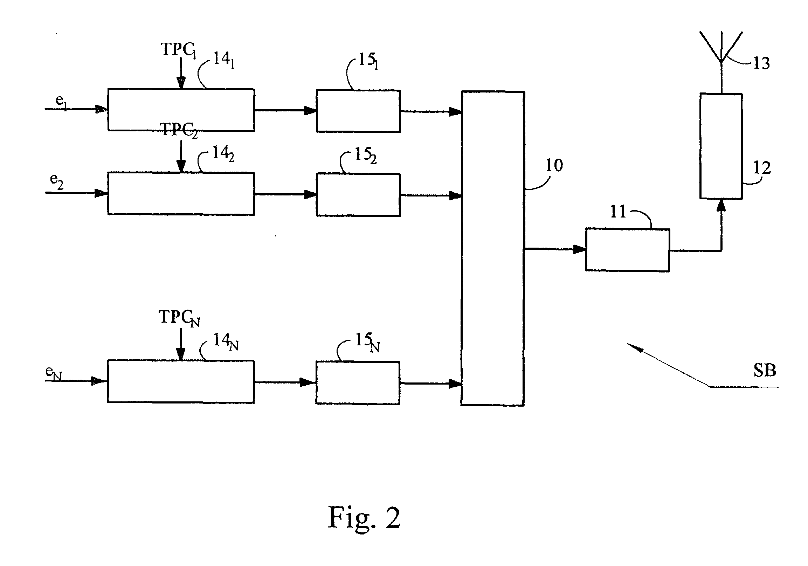

On a représenté à la Fig. 2 un système qui utilise des moyens permettant la mise en oeuvre d'une autre solution connue au problème mentionné ci-dessus. Les mêmes unités que celles qui ont déjà été représentées à la Fig. 1 portent les mêmes références. Ce système comporte de plus des unités $15_1$ à $15_N$ de limitation qui agissent respectivement sur les signaux élémentaires formant le signal composite. Ces unités $15_1$ à $15_N$ sont, par exemple, comme cela est le cas à la Fig. 2, placées entre les unités de contrôle de puissance $14_1$ et $14_N$ et les entrées correspondantes de l'unité de sommation 10.

Chaque unité $15_i$ a pour rôle de modifier le signal sur son entrée de manière à limiter sa contribution moyenne Pi à la puissance du signal composite transmis à une valeur prédéterminée Pi_max, la somme de ces valeurs Pi_max étant toujours inférieure ou égale à la valeur de la puissance d'émission de fonctionnement voulue. WO 0003487 décrit une méthode et un système d'allocation de la puissance d'émission aux stations mobiles de manière à pas dépasser un niveau de puissance maximale de la station de base.

Grâce à ce système, les signaux élémentaires destinés à une station mobile peuvent venir à saturation, sans pour autant avoir un impact sur les signaux élémentaires des autres stations mobiles. Ainsi, en cas de saturation des signaux destinés à une station mobile, le niveau de puissance qu'elle reçoit ne sera pas suffisant pour maintenir la communication qui sera alors interrompue. Cependant, les autres stations mobiles dont les signaux élémentaires ne sont pas saturés n'ont pas à subir une rupture de communication.

Un inconvénient de cette méthode réside dans le fait qu'il est nécessaire, à l'établissement d'une nouvelle communication d'une station mobile, de décider de la valeur maximale Pi_max admise pour sa contribution à la puissance d'émission de la station de base à laquelle elle est rattachée, ce qui n'est pas trivial en soit car toute décision a des répercussions importantes sur la capacité et l'étendue de la couverture de la station de base concernée. Par ailleurs, il faut également toujours s'assurer que la somme des puissances maximales Pi_max de transmission des signaux dédiés soit bien toujours inférieure à la valeur de la puissance de fonctionnement de la station de base. Ceci requiert une unité de planification dans le réseau qui s'avère être coûteuse et difficile à maintenir, surtout quand des communications sont basculées d'une station de base à une autre lors du déplacement du mobile.

On notera que cette méthode est basée sur le fait que la puissance du signal composite est égale à la somme des puissances des signaux élémentaires formant ce signal composite. Or, la contribution de puissance de chaque signal élémentaire à la puissance d'émission de la station de base étant bornée par sa puissance maximale Pi_max, la puissance d'émission du signal composite est bornée par la somme de ces contributions de puissance maximales. En pratique, les contributions de puissance des signaux élémentaires ne sont pas toutes en même temps à leurs valeurs maximales. Par exemple, seuls les signaux destinés aux stations mobiles en bordure de la roue de couverture pourront être en même temps à leur niveau maximal de puissance, alors que les signaux destinés aux stations mobiles proches de la station de base seront transmis à une valeur de puissance plus faible. Ainsi, même à forte charge, la puissance du signal composite est loin d'atteindre sa valeur de fonctionnement, qui ne sera donc pratiquement jamais utilisée.

Le but de la présente invention est donc de proposer une méthode qui ne présente pas les inconvénients mentionnés ci-dessus des méthodes de l'état de la technique. En particulier, il est de proposer une méthode qui permette d'utiliser au mieux la puissance de la station de base tout en évitant des phénomènes de distorsion, de sous-utilisation de la capacité radio, et de trop lourdes installations de planification de puissance dans le réseau.

A cet effet, la présente invention concerne un système de contrôle de la puissance d'émission d'une station de base avec laquelle plusieurs stations mobiles sont en communication, ladite station de base comportant des unités de commande de puissance qui reçoivent respectivement les signaux destinés auxdites stations mobiles ainsi que des signaux de commande de puissance émis par lesdites stations mobiles pour commander la contribution dudit signal à la puissance d'émission de ladite station de base, un sommateur pour former un signal composite à partir desdits signaux délivrés par lesdites unités de commande de puissance. Ce système de contrôle est caractérisé en ce que ladite station de base comporte des unités de sommation, les signaux d'entrée d'un niveau de priorité donné étant appliqués aux entrées de chaque unité de sommation qui délivre alors un signal sous-composite à l'entrée d'une unité d'atténuation dont la sortie est reliée à l'entrée dudit sommateur, chaque unité d'atténuation étant prévue pour atténuer d'un coefficient d'atténuation variable le signal sous-composite à son entrée lorsque la puissance d'émission de ladite station de base dépasse une puissance prédéterminée, ledit coefficient d'atténuation étant d'autant plus important que le niveau de priorité des signaux d'entrée correspondant est faible.

Selon une autre caractéristique de l'invention, ledit coefficient d'atténuation de chaque unité d'atténuation est une puissance P d'un coefficient d'atténuation de base, la valeur de P étant identique pour toutes lesdites unités d'atténuation.

Selon une autre caractéristique de l'invention, chaque coefficient d'atténuation de base est inférieur à l'unité, le coefficient d'une unité d'atténuation est d'autant plus voisin de l'unité que le niveau de priorité des signaux d'entrée correspondant est fort.

Selon une autre caractéristique de l'invention, un signal d'entrée destiné à une station mobile est affecté à un signal sous-composite au début de la communication.

Selon une autre caractéristique de l'invention, l'affectation d'un signal d'entrée destiné à une station mobile à un signal sous-composite n'est modifiée qu'au moment de l'arrivée d'au moins un événement qui ne concerne que ladite station mobile.

Selon une autre caractéristique de l'invention, ledit ou chaque événement est un changement de type de service, une atteinte du niveau de saturation, l'entrée en soft handover de ladite station mobile. On rappelle que le soft-handover a lieu lorsque le mobile est rattaché à la fois à plus d'une station de base, l'entrée en soft-handover étant l'événement correspondant au moment où le mobile commence à être rattaché à la fois à plus d'une station de base.

La présente invention concerne également un procédé de contrôle de la puissance d'émission de la section émettrice d'une station de base qui reçoit sur ses entrées des signaux d'entrée qui sont destinés à être transmis à des stations mobiles rattachées à ladite station de base. Selon l'invention, un tel procédé est caractérisé en ce qu'il consiste à former des groupes de signaux d'entrée selon des critères de priorité prédéterminés affectés auxdits signaux d'entrée et à former à partir desdits signaux d'entrée de chaque groupe des signaux sous-composites, à former à partir desdits signaux sous-composites un signal composite qui est transmis auxdites stations mobiles, et en ce qu'il consiste à atténuer lesdits signaux sous-composites de manière à ce que la puissance du signal composite soit toujours inférieure à un niveau de puissance prédéterminée, les coefficients d'atténuation respectivement appliqués auxdits signaux sous-composites étant différents selon les signaux sous-composites considérés.

Selon une autre caractéristique de l'invention, ledit coefficient d'atténuation appliqué à chaque signal sous-composite a une valeur d'autant plus importante que le niveau de priorité des signaux d'entrée qui le forment est fort.

Selon une autre caractéristique de l'invention, les coefficients d'atténuation respectivement appliqués aux signaux sous-composites sont une même puissance $P$ de coefficients d'atténuation de base, la variation desdits coefficients d'atténuation étant obtenue par la variation de ladite valeur de la puissance $P$.

Selon une autre caractéristique de l'invention, la valeur de $P$ est choisie de manière à permettre un non-dépassement du niveau critique de puissance, la valeur de juste inférieure $P-1$ donnant un dépassement dudit niveau critique de puissance.

Selon une autre caractéristique de l'invention, chaque coefficient d'atténuation de base est inférieur à l'unité, le coefficient d'une unité d'atténuation étant d'autant plus voisin de l'unité que le niveau de priorité des signaux d'entrée correspondant est fort.

Selon une autre caractéristique de l'invention, un signal d'entrée destiné à une station mobile est affecté à un groupe de formation d'un signal sous-composite au début de la communication.

Selon une autre caractéristique de l'invention, l'affectation d'un signal d'entrée destiné à une station mobile à un groupe de formation d'un signal sous-composite n'est modifiée qu'au moment de l'arrivée d'au moins un événement qui ne concerne uniquement que ladite station mobile.

Selon une autre caractéristique de l'invention, ledit ou chaque événement est un changement de type de service, une atteinte du niveau de saturation, de l'entrée en soft handover de ladite station mobile.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels

La Fig. 1 est une vue schématique d'un système de communication pour téléphones mobiles, en particulier de la section d'émission d'une station de base et de stations mobiles,
La Fig. 2 est une vue schématique de la section d'émission d'une station de base selon un second mode de réalisation conformément à l'art antérieur,
La Fig. 3 est une vue schématique de la section d'émission d'une station de base selon la présente invention.

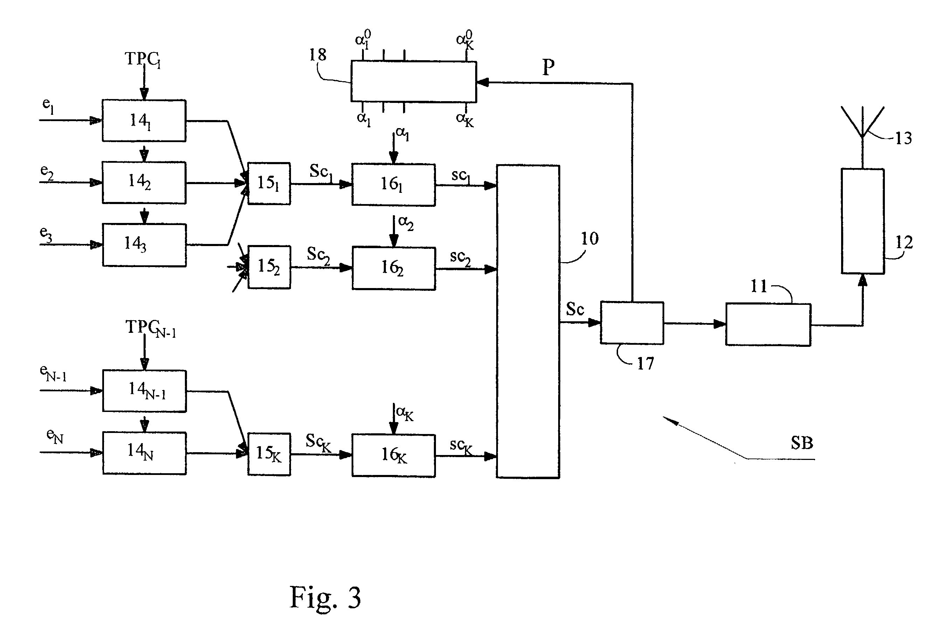

A la Fig. 3, on considère la section émettrice d'une station de base SB qui reçoit sur ses entrées des signaux d'entrée $e_1$ à eN qui sont destinés à être transmis à des stations mobiles $SM_1$ à $SM_M$ rattachées à ladite station de base SB. Ces signaux d'entrée $e_1$ à $e_N$ peuvent être des signaux dédiés à telle ou telle station mobile mais aussi des signaux destinés à un ensemble ou à l'ensemble des stations mobiles $SM_1$ à $SM_M$.

Selon le procédé de la présente invention, on forme des groupes de signaux d'entrée selon des critères de priorité prédéterminés affectés à ces signaux et on somme les signaux d'entrée de chaque groupe de manière à former des signaux sous-composites. Les signaux sous-composites ainsi formés sont l'objet de traitements d'atténuation respectifs avant d'être sommés pour former un signal composite qui est transmis auxdites stations mobiles. Les traitements d'atténuation mis en oeuvre sont prévus de manière à ce que la puissance du signal composite soit toujours inférieure à une puissance prédéterminée dite puissance de fonctionnement de ladite station de base, les coefficients d'atténuation étant différents selon les signaux composites considérés.

Ainsi, lorsque la puissance moyenne du signal composite devient supérieure à la puissance de fonctionnement, on peut modifier, les unes différemment des autres, les contributions des signaux sous-composites à la puissance d'émission du signal composite, c'est-à-dire à la puissance d'émission de la station de base.

Pour la mise en oeuvre du procédé de la présente invention qui vient d'être explicité, on propose la section émettrice dont le schéma est représenté à la Fig. 3.

Cette section émettrice comporte autant d'unités de contrôle de puissance $14_1$ à $14_N$ que de signaux d'entrée $e_1$ à $e_N$ qu'elle est susceptible d'émettre à M stations mobiles $SM_1$ à $SM_M$. Elle comporte des unités

de sommation $15_1$ à $15_K$ de manière à former K signaux sous-composites $Sc_1$ à $Sc_K$ respectivement appliqués à des unités d'atténuation $16_1$ à $16_K$.

Sur les entrées de chaque unité de sommation $15_1$ à $15_K$ sont appliqués des signaux d'entrée, formant un groupe de signaux d'entrée, sélectionnés en fonction de critères de priorité. Chaque signal sous-composite est donc affecté à un niveau de priorité.

Sur une entrée de chaque unité d'atténuation $16_1$ à $16_K$, est appliqué le coefficient d'atténuation $\alpha_1$ à $\alpha_K$ auquel est soumis le signal sous-composite sur son entrée. On a ainsi le signal en sortie $sc_i$ d'une unité d'atténuation $16_i$ qui peut s'exprimer de la manière suivante :

$$sc_i = \alpha_i \times Sc_i$$

Avantageusement, chaque coefficient d'atténuation $\alpha_i$ a une valeur qui est comprise entre 0 et 1.

Par ailleurs, plus le niveau de priorité d'un signal sous-composite $Sc_i$ est élevé, plus le coefficient $\alpha_i$ est voisin de 1 et réciproquement, plus le niveau de priorité d'un signal sous-composite $Sc_i$ est faible, plus le coefficient $\alpha_i$ est voisin de 0.

Une fois atténués, les signaux sous-composites $sc_i$ sont appliqués à une unité de sommation 10 destinée à former un signal composite Sc. Comme dans l'état de la technique, le signal composite Sc est converti en fréquences radiofréquences dans une unité de conversion 11 avant d'être amplifié par un amplificateur 12 pour être émis au moyen d'une antenne 13.

Avec une telle section émettrice, lorsqu'à un temps t, la puissance moyenne du signal composite devient supérieure à un niveau critique, tous les coefficients d'atténuation $\alpha_1$ à $\alpha_K$ sont abaissés, par exemple de manière discrète et ce, jusqu'à un temps où la puissance du signal composite Sc devienne inférieure à la puissance prédéterminée de fonctionnement.

Avantageusement, plus le niveau de priorité d'un signal sous-composite $sc_i$ est élevé, moins le coefficient $\alpha_i$ est abaissé et réciproquement, plus le niveau de priorité d'un signal sous-composite $sc_i$ est faible, plus le coefficient $\alpha_i$ est abaissé.

Toujours avantageusement et pour la mise en oeuvre de la caractéristique précédente, l'atténuation effective $\alpha_i$ appliquée à un signal sous-composite $Sc_i$ est égale à une puissance $P^{ième}$ d'une atténuation de base $\alpha_i^0$, P étant identique pour les K signaux sous-composites $Sc_1$ à $Sc_K$ (on a donc $\alpha_i = (\alpha_i^0)^P$).

De plus, la valeur de P est supérieure ou égale à zéro. Ainsi, c'est en faisant varier la valeur de P qui l'on va faire varier la contribution à la puissance d'émission de chaque signal sous-composite. Cette valeur de P est déterminée de manière que la puissance du signal composite soit sensiblement égale au niveau de la puissance de fonctionnement.

Par exemple, on choisira la valeur de P qui aboutit à un non-dépassement de la puissance de fonctionnement mais telle que le choix de la valeur de P-1 à sa place aurait abouti à un dépassement de cette puissance de fonctionnement.

On notera qu'avec ce type de méthode, certains appels prioritaires peuvent n'être jamais saturés (par exemple dans le cas où le coefficient de base $\alpha_i^0$ est choisi égal à un). Cette méthode permet néanmoins que des appels non prioritaires puissent tout de même passer, par exemple lorsque la communication peut se faire par le biais d'une autre station de base non saturée (cas d'un appel en soft handover), ou quand la communication peut se faire un peu plus tard.

Selon le mode de réalisation représenté à la Fig. 3, le système de la présente invention comporte une unité de vérification 17 qui reçoit sur son entrée le signal composite issu du sommateur 10 et qui délivre la valeur de P à une unité de calcul 18 prévue pour déterminer les coefficients $\alpha_1$ à $\alpha_K$ à partir des coefficients de base $\alpha_1^0$ à $\alpha_K^0$.

Lorsque le signal composite Sc a une puissance qui dépasse la puissance de fonctionnement, l'unité de vérification 17 incrémente la valeur de P, ce qui a pour conséquence, une augmentation des coefficients d'atténuation $\alpha_1$ à $\alpha_K$ et donc des signaux sous-composites $sc_1$ à $sc_K$. Lorsqu'il se trouve à un niveau inférieur à ce niveau critique, elle décrémente la valeur de P, ce qui a pour effet une diminution des coefficients d'atténuation $\alpha_1$ à $\alpha_K$ et donc des signaux sous-composites $sc_1$ à $sc_K$.

L'attribution à un appel donné d'un niveau de priorité plus qu'un autre et, par conséquent, l'attribution des signaux d'entrée $e_i$ qui lui sont destinés à un groupe de formation d'un signal sous-composite $sc_j$ se fera en considération des appels déjà en saturation et des appels qui ne le sont pas, en discriminant les appels selon le nombre de stations de base impliquées dans leurs phases de soft handover et/ou en discriminant les appels type connection des appels type packet.

Selon un autre procédé de l'invention, un appel est affecté à un niveau de priorité au début de la communication. Son appartenance à un groupe de formation d'un signal sous-composite plutôt qu'à un autre n'est modifiée que selon des événements exceptionnels qui ne concernent uniquement que lui. Il peut s'agir, par exemple, d'un changement de type de service, de l'arrivée à son niveau de saturation dudit appel, de son entrée en phase de soft handover, de la variation du nombre de stations de base auxquelles la station mobile correspondante est rattachée en phase de handover, etc. Les appels sont donc affectés à un signal sous-composite indépendamment de ce qui se passe pour les autres appels.

La présente invention permet une utilisation effective optimale de la puissance de la station de base lorsque celle-ci devient saturée. Elle ne requiert pas, contrairement aux systèmes de l'état de la technique, de rafraîchissement rapide des niveaux de puissance maximale entre tous les signaux, ni une détermination conjointe de ces niveaux. En effet, les coefficients de base sont déterminés à l'avance par l'opérateur du réseau.

## Revendications

1. Système de contrôle de la puissance d'émission d'une station de base (SB) avec laquelle plusieurs stations mobiles ($SM_1$ à $SM_N$) sont en communication, ladite station de base (SB) comportant des unités de commande de puissance ($14_1$ à $14_N$) qui reçoivent respectivement les signaux destinés auxdites stations mobiles ($SM_1$ à $SM_N$) ainsi que des signaux de commande de puissance ($TCP_1$ à $TCP_N$) émis par lesdites stations mobiles ($SM_1$ à $SM_N$) pour commander la contribution dudit signal à la puissance d'émission de ladite station de base (SB), un sommateur (10) pour former un signal composite (Sc) à partir desdits signaux délivrés par lesdites unités de commande de puissance, **caractérisé en ce que** ladite station de base (SB) comporte des unités de sommation ($15_1$ à $15_K$), les signaux d'entrée d'un niveau de priorité donné étant appliqués aux entrées de chaque unité de sommation qui délivre alors un signal sous-composite ($Sc_1$ à $Sc_K$) à l'entrée d'une unité d'atténuation ($16_1$ à $16_K$) dont la sortie est reliée à l'entrée dudit sommateur (10), chaque unité d'atténuation ($16_1$ à $16_K$) étant prévue pour atténuer d'un coefficient d'atténuation variable ($\alpha_1$ à $\alpha_K$) le signal sous-composite ($Sc_1$ à $Sc_K$) à son entrée lorsque la puissance d'émission de ladite station de base dépasse une puissance prédéterminée, ledit coefficient d'atténuation ($\alpha_1$ à $\alpha_K$) étant d'autant plus important que le niveau de priorité des signaux d'entrée correspondant est faible.

2. Système de contrôle de puissance d'émission d'une station de base selon la revendication 1, **caractérisé en ce que** ledit coefficient d'atténuation ($\alpha_1$ à $\alpha_K$) de chaque unité d'atténuation ($16_1$ à $16_K$) est une puissance P d'un coefficient d'atténuation de base ($\alpha_1^0$ à $\alpha_K^0$), la valeur de P étant identique pour toutes lesdites unités d'atténuation.

3. Système de contrôle de puissance d'émission d'une station de base selon la revendication 2, **caractérisé en ce que** chaque coefficient d'atténuation de base ($\alpha_1^0$ à $\alpha_K^0$) est inférieur à l'unité, le coefficient d'une unité d'atténuation est d'autant plus voisin de l'unité que le niveau de priorité des signaux d'entrée correspondant est fort.

4. Système de contrôle de puissance d'émission d'une station de base selon une des revendications précédentes, **caractérisé en ce qu'**un signal d'entrée ($e_i$) destiné à une station mobile (SMi) est affecté à un signal sous-composite (Scj) au début de la communication.

5. Système de contrôle selon une des revendications précédentes, **caractérisé en ce que** l'affectation d'un signal d'entrée ($e_i$) destiné à une station mobile (Smi) à un signal sous-composite (Scj) n'est modifiée qu'au moment de l'arrivée d'au moins un événement qui ne concerne que ladite station mobile.

6. Système de contrôle selon la revendication 5, **caractérisé en ce que** ledit ou chaque événement est un changement de type de service, une atteinte du niveau de saturation, de l'entrée en soft handover de ladite station mobile.

7. Procédé de contrôle de la puissance d'émission de la section émettrice d'une station de base (SB) qui reçoit sur ses entrées des signaux d'entrée ($e_1$ à $e_N$) qui sont destinés à être transmis à des stations mobiles ($SM_1$ à $SM_M$) rattachées à ladite station de base (SB), **caractérisé en ce qu'**il consiste à former des groupes de signaux d'entrée selon des critères de priorité prédéterminés affectés auxdits signaux d'entrée ($e_1$ à $e_N$) et à former à partir desdits signaux d'entrée ($e_1$ à $e_N$) de chaque groupe des signaux sous-composites ($Sc_1$ à $Sc_K$), à former à partir desdits signaux sous-composites ($Sc_1$ à $Sc_K$) un signal composite (Sc) qui est transmis auxdites stations mobiles($SM_1$ à $SM_M$), et **en ce qu'**il consiste à atténuer lesdits signaux sous-composites ($Sc_1$ à $Sc_K$) de manière à ce que la puissance du signal composite soit toujours inférieure à une puissance prédéterminée, les coefficients d'atténuation ($\alpha_1$ à $\alpha_K$) respectivement appliqués auxdits signaux sous-composites ($Sc_1$ à $Sc_K$) étant différents selon les signaux sous-composites considérés ($Sc_1$ à $Sc_K$).

8. Procédé de contrôle selon la revendication 7, **caractérisé en ce que** ledit coefficient d'atténuation ($\alpha_1$ à $\alpha_K$) appliqué à chaque signal sous-composite a une valeur d'autant plus importante que le niveau de priorité des signaux d'entrée qui le forment est fort.

9. Procédé de contrôle selon la revendication 8, **caractérisé en ce que** les coefficients d'atténuation ($\alpha_1$ à $\alpha_K$) respectivement appliqués aux signaux sous-composites ($Sc_1$ à $Sc_K$) sont une même puissance P de coefficients d'atténuation de base ($\alpha_1^0$ à $\alpha_K^0$), la variation desdits coefficients d'atténuation étant obtenue par la variation de ladite valeur de la puissance P.

10. Procédé de contrôle selon la revendication 9, **caractérisé en ce que** la valeur de P est choisie de manière à permettre un non-dépassement de ladite puissance prédéterminée, la valeur de juste inférieure P-1 donnant un dépassement de ladite puissance prédéterminée.

11. Procédé de contrôle de puissance d'émission d'une station de base selon la revendication 9 ou 10, **caractérisé en ce que** chaque coefficient d'atténuation de base ($\alpha_1^0$ à $\alpha_K^0$) est inférieur à l'unité, le coefficient d'une unité d'atténuation ($\alpha_1^0$ à $\alpha_K^0$) étant d'autant plus voisin de l'unité que le niveau de priorité des signaux d'entrée correspondant est fort.

12. Procédé de contrôle de puissance d'émission d'une station de base selon une des revendications 7 à 11, **caractérisé en ce qu'**un signal d'entrée destiné à une station mobile est affecté à un groupe de formation d'un signal sous-composite au début de la communication.

13. Procédé de contrôle selon une des revendications 7 à 12, **caractérisé en ce que** l'affectation d'un signal d'entrée destiné à une station mobile à un groupe de formation d'un signal sous-composite n'est modifiée qu'au moment de l'arrivée d'au moins un événement qui ne concerne uniquement que ladite station mobile.

14. Procédé de contrôle selon la revendication 13, **caractérisé en ce que** ledit ou chaque événement est un changement de type de service, une atteinte du niveau de saturation, de l'entrée en soft handover de ladite station mobile.


**Claims**

1. System for controlling the transmission power of a base station with which a number of mobile stations are in communication, said base station having power command units which receive respectively the signals intended for said mobile stations and power command signals sent by said mobile stations for commanding the contribution of said signal to the transmission power of said base station, and a summer (10) for forming a composite signal from said signals delivered by said power command units, **characterised in that** said base station has summation units, the input signals of a given priority level being applied to the inputs of each summation unit which then delivers a sub-composite signal to the input of an attenuation unit whose output is connected to the input of said summer, each attenuation unit being designed to attenuate, by a variable attenuation coefficient, the sub-composite signal at its input when the transmission power of said base station exceeds a predetermined power, said attenuation coefficient being larger the lower the corresponding input signal priority level.

2. System for controlling the transmission power of a base station according to Claim 1, **characterised in that** said attenuation coefficient of each attenuation unit is a power P of a base attenuation coefficient, the value of P being identical for all said attenuation units.

3. System for controlling the transmission power of a base station according to Claim 2, **characterised in that** each base attenuation coefficient is less than unity, the coefficient of an attenuation unit being closer to unity the higher the corresponding input signal priority level.

4. System for controlling the transmission power of a base station according to one of the preceding claims, **characterised in that** an input signal intended for a mobile station is assigned to a sub-composite signal at the beginning of the communication.

5. Control system according to one of the preceding claims, **characterised in that** the assignment of an input signal intended for a mobile station to a sub-composite signal is modified only at the time of the arrival of at least one event which concerns only said mobile station.

6. Control system according to Claim 5, **characterised in that** said or each event is a change in type of service, reaching of the saturation level, or entry into soft handover of said mobile station.

7. Method of controlling the transmission power of the sending section of a base station SB which receives, on its inputs, input signals $e_1$ to $e_N$ which are intended to be transmitted to mobile stations $SM_1$ to $SM_M$ attached to said base station SB, **characterised in that** it consists of forming groups of input signals according to predetermined priority criteria assigned to said input signals and of forming, from said input signals of each group, sub-composite signals, of forming, from said sub-composite signals, a composite signal which is transmitted to said mobile stations, and **in that** it consists of attenuating said sub-composite signals so that the power of the composite signal is always less than a predetermined power, the attenuation coefficients respectively applied to said sub-composite signals being different according to the sub-composite signals considered.

8. Control method according to Claim 7, **characterised in that** said attenuation coefficient applied to each sub-composite signal has a value which is greater the higher the priority level of the input signals from which it is formed.

9. Control method according to Claim 8, **characterised in that** the attenuation coefficients respectively applied to the sub-composite signals are a same power P of base attenuation coefficients, the variation of said attenuation coefficients being obtained by variation of said value of the power P.

10. Control method according to Claim 9, **characterised in that** the value of P is chosen so as to allow non-exceeding of said predetermined power, the value just below, P-1, causing exceeding of said predetermined power.

11. Method for controlling the transmission power of a base station according to Claim 9 or 10, **characterised in that** each base attenuation coefficient is less than unity, the coefficient of an attenuation unit being closer to unity the higher the corresponding input signal priority level.

12. Method for controlling the transmission power of a base station according to one of Claims 7 to 11, **characterised in that** an input signal intended for a mobile station is assigned to a group for forming a sub-composite signal at the beginning of the communication.

13. Control method according to one of Claims 7 to 12, **characterised in that** the assignment of an input signal intended for a mobile station to a group for forming a sub-composite signal is modified only at the time of the arrival of at least one event which exclusively concerns only said mobile station.

14. Control method according to Claim 13, **characterised in that** said or each event is a change in type of service, reaching of the saturation level, or entry into soft handover of said mobile station.


**Patentansprüche**

1. System zur Sendeleistungsregelung einer Basisstation (SB), mit der mehrere Mobilstationen ($SM_1$ bis $SM_N$) in Verbindung stehen, wobei die Basisstation (SB) Leistungssteuereinheiten ($14_1$ bis $14_N$), die jeweils die Signale, die für die Mobilstationen ($SM_1$ bis $SM_N$) bestimmt sind, sowie Leistungssteuersignale ($TCP_1$ bis $TCP_N$), die von den Mobilstationen ($SM_1$ bis $SM_N$) zum Steuern des Signalbeitrags an der Sendeleistung der Basisstation (SB) gesendet werden, empfangen, und einen Summierer (10), um aus den von den Leistungssteuereinheiten abgegebenen Signalen ein zusammengesetztes Signal zu bilden (Sc), umfasst, **dadurch gekennzeichnet, dass** die Basisstation (SB) Summiereinheiten ($15_1$ bis $15_K$) umfasst, wobei die Eingangssignale einer bestimmten Prioritätsstufe an die Eingänge jeder Summiereinheit angelegt werden, die dann ein zusammengesetztes Sub-Signal ($Sc_1$ bis $Sc_K$) an den Eingang einer Dämpfungseinheit ($16_1$ bis $16_K$) abgibt, deren Ausgang mit dem Eingang des Summierers (10) verbunden ist, wobei jede Dämpfungseinheit ($16_1$ bis $16_K$) vorgesehen ist, um das zusammengesetzte Sub-Signal ($Sc_1$ bis $Sc_K$) an seinem Eingang um einen variablen Dämpfungskoeffizienten ($\alpha_1$ bis $\alpha_K$) zu dämpfen, wenn die Sendeleistung der Basisstation eine vorherbestimmte Leistung überschreitet, wobei der Dämpfungskoeffizient ($\alpha_1$ bis $\alpha_K$) um so größer ist, je niedriger die Prioritätsstufe der entsprechenden Eingangssignale ist.

2. System zur Sendeleistungsregelung einer Basisstation gemäß Anspruch 1, **dadurch gekennzeichnet, dass** der Dämpfungskoeffizient ($\alpha_1$ bis $\alpha_K$) jeder Dämpfungseinheit ($16_1$ bis $16_K$) eine Potenz P eines Grunddämpfungskoeffizienten ($\alpha^0_1$ bis $\alpha^0_K$) ist, wobei der Wert P für alle Dämpfungseinheiten identisch ist.

3. System zur Sendeleistungsregelung einer Basisstation gemäß Anspruch 2, **dadurch gekennzeichnet, dass** jeder Grunddämpfungskoeffizient ($\alpha^0_1$ bis $\alpha^0_K$) kleiner als Eins ist, wobei der Koeffizient einer Dämpfungseinheit um so näher an Eins liegt, je größer die Prioritätsstufe der entsprechenden Eingangssignale ist.

4. System zur Sendeleistungsregelung einer Basisstation gemäß einem der vorhergehenden Ansprüche, **dadurch gekennzeichnet, dass** ein Eingangssignal ($e_i$), das für eine Mobilstation (SMi) bestimmt ist, zu Beginn der Verbindung einem zusammengesetzten Sub-Signal ($Sc_j$) zugewiesen wird.

5. System zur Regelung gemäß einem der vorhergehenden Ansprüche, **dadurch gekennzeichnet, dass** die Zuweisung eines Eingangssignals ($e_i$), das für eine Mobilstation (Smi) bestimmt ist, an ein zusammengesetztes Sub-Signal (Scj) nur dann geändert wird, wenn mindestens ein Ereignis eintrifft, das nur die Mobilstation betrifft.

6. System zur Regelung gemäß Anspruch 5, **dadurch gekennzeichnet, dass** das oder jedes Ereignis eine Änderung der Dienstart, eine Einschränkung der Sättigungsstufe, des Eintritts in die softwaremäßige Gesprächsumschaltung der Mobilstation ist.

7. Verfahren zur Sendeleistungsregelung des Sendeabschnitts einer Basisstation (SB), die an ihren Eingängen Eingangssignale ($e_1$ bis $e_N$) empfängt, die dazu bestimmt sind, an Mobilstationen ($SM_1$ bis

$SM_M$) übertragen zu werden, die an die Basisstation (SB) angeschlossen sind, **dadurch gekennzeichnet, dass** es darin besteht, Eingangssignalgruppen nach vorherbestimmten Prioritätskriterien, die den Eingangssignalen ($e_1$ bis $e_N$) zugewiesen sind, zu bilden, und von diesen Eingangssignalen ($e_1$ bis $e_N$) jeder Gruppe ausgehend zusammengesetzte Sub-Signale ($Sc_1$ bis $Sc_K$) zu bilden, von den zusammengesetzten Sub-Signalen ($Sc_1$ bis $Sc_K$) ausgehend ein zusammengesetztes Signal (Sc) zu bilden, das an die Mobilstationen ($SM_1$ bis $SM_M$) übertragen wird, und dass es darin besteht, die zusammengesetzten Sub-Signale ($Sc_1$ bis $Sc_K$) derart zu dämpfen, dass die Leistung des zusammengesetzten Signals immer niedriger als eine vorherbestimmte Leistung ist, wobei die Dämpfungskoeffizienten ($\alpha_1$ bis $\alpha_K$), die jeweils auf die zusammengesetzten Sub-Signale ($Sc_1$ bis $Sc_K$) angewendet werden, je nach den berücksichtigten zusammengesetzten Sub-Signalen ($Sc_1$ bis $Sc_K$) unterschiedlich sind.

8. Verfahren zur Regelung gemäß Anspruch 7, **dadurch gekennzeichnet, dass** der Dämpfungskoeffizient ($\alpha_1$ bis $\alpha_K$), der auf jedes zusammengesetzte Sub-Signal angewendet wird, einen Wert aufweist, der um so größer ist, je größer die Prioritätsstufe der Eingangssignale ist, welche dieses bilden.

9. Verfahren zur Regelung gemäß Anspruch 8, **dadurch gekennzeichnet, dass** die Dämpfungskoeffizienten ($\alpha_1$ bis $\alpha_K$), die jeweils auf die zusammengesetzten Sub-Signale ($Sc_1$ bis $Sc_K$) angewendet werden, dieselbe Potenz P der Grunddämpfungskoeffizienten ($\alpha^0_1$ bis $\alpha^0_K$) sind, wobei die Veränderung der Dämpfungskoeffizienten durch die Veränderung des Werts der Potenz P erhalten wird.

10. Verfahren zur Regelung gemäß Anspruch 9, **dadurch gekennzeichnet, dass** der Wert P derart gewählt wird, dass er kein Überschreitung der vorherbestimmten Leistung erlaubt, wobei der genau darunterliegende Wert P-1 eine Überschreitung der vorherbestimmten Leistung ergibt.

11. Verfahren zur Sendeleistungsregelung einer Basisstation gemäß Anspruch 9 oder 10, **dadurch gekennzeichnet, dass** jeder Grunddämpfungskoeffizient ($\alpha^0_1$, bis $\alpha^0_K$) kleiner als Eins ist, wobei der Koeffizient einer Dämpfungseinheit ($\alpha^0_1$ bis $\alpha^0_K$) so näher an Eins liegt, je größer die Prioritätsstufe der entsprechenden Eingangssignale ist.

12. Verfahren zur Sendeleistungsregelung einer Basisstation gemäß Anspruch 7 bis 11, **dadurch gekennzeichnet, dass** ein Eingangssignal, das für eine Mobilstation bestimmt ist, zu Beginn der Verbindung einer Gruppe zur Bildung eines zusammengesetzten Sub-Signals zugewiesen wird.

13. Verfahren zur Regelung gemäß einem der Ansprüche 7 bis 12, **dadurch gekennzeichnet, dass** die Zuweisung eines Eingangssignals, das für eine Mobilstation bestimmt ist, an eine Gruppe zur Bildung eines zusammengesetzten Sub-Signals nur dann geändert wird, wenn mindestens ein Ereignis auftritt, das nur die Mobilstation betrifft.

14. Verfahren zur Regelung gemäß Anspruch 13, **dadurch gekennzeichnet, dass** das oder jedes Ereignis eine Änderung der Dienstart, eine Einschränkung der Sättigungsstufe, des Eintritts in die softwaremäßige Gesprächsumschaltung der Mobilstation ist.

Fig. 1

Fig. 2

EP 1 130 798 B1

Fig. 3